# EUROPÄISCHE PATENTSCHRIFT

(11) **EP 1 231 703 B1**
(45) Veröffentlichungstag und Bekanntmachung des Hinweises auf die Patenterteilung: **03.01.2007**
(21) Anmeldenummer: 02000570.8
(22) Anmeldetag: 10.01.2002
(51) Int. Cl.: H02K 31/00, H02K 53/00

(54) **Unipolar-Maschine**
Unipolar machine
Machine unipolaire

(30) Priorität: 17.01.2001 DE 10101785
(43) Veröffentlichungstag der Anmeldung: 14.08.2002
(73) Patentinhaber: Schlüter, Gerd, 24146 Kiel (DE); Lipski, Hans-Jürgen, D-22761 Hamburg (DE)
(72) Erfinder: Lipski, Hans-Jürgen, 22761 Hamburg (DE)
(74) Vertreter: Meyer, Ludgerus

(56) Entgegenhaltungen:
- EP-A- 0 806 832
- DE-A- 2 823 313
- DE-A- 3 509 906
- JP-A- 58 099 255
- US-A- 4 698 538
- PATENT ABSTRACTS OF JAPAN vol. 1999, no. 07, 31. März 1999 (1999-03-31) -& JP 01 270759 A (KIN DAIGEN), 30. Oktober 1989 (1989-10-30)

## Beschreibung

Die Erfindung betrifft eine Unipolar-Maschine nach dem Oberbegriff des Anspruchs 1.

Elektrische Maschinen erzeugen üblicherweise Ströme mit wechselnder Polarität oder sich ändernder Spannung. Bei Drehstrom- oder Wechselstrommaschinen werden Wechselspannungen erzeugt, während bei Gleichstrommaschinen die pulsierende Spannung mittels Stromwendern in eine nach wie vor pulsierende Gleichspannung gewandelt wird.

Es sind auch Unipolar-Maschinen bekannt, die das Prinzip einer Unipolar-Induktion verwenden. Bei der Unipolar-Induktion wird eine elektrische Gleichspannung mit Hilfe von Permanentmagneten erzeugt.

Der Vorteil einer Unipolar-Maschine liegt also darin, dass in deren Anker keine sich periodisch ändernde Wechsel-EMK induziert wird, sondern eine EMK von gleichbleibender Richtung und gleichbleibender Höhe, so dass eine konstante Gleichspannung erzeugt wird.

Bisher bekannte Unipolar-Maschinen verwenden sich bewegende Ankerleiter, die stets in einem Feld gleicher Polarität angeordnet sind. Stromwender sind daher überflüssig, um eine Gleichspannung zu erzeugen. Die erzeugte EMK ist relativ gering, so dass die Ankerleiter in der Regel in Reihe geschaltet werden, indem man sie zwischen je zwei Bürsten legt und diese über Rückleiter, die außen um die Maschine herumzuführen sind, in Reihenschaltung miteinander verbindet. Aufgrund der doppelten Zahl von Bürsten gegenüber Gleichstrommaschinen haben sich Unipolar-Maschinen nicht durchgesetzt. Lediglich für Spezialanwendungen sind Unipolar-Maschinen, bei denen nur kleine Ströme erzeugt werden sollen, häufiger eingesetzt worden.

Aus der DE 15 63 003 ist ein Generator mit einem Rotor bekannt, der ein Paar fest verbundener Unipolar-Magnete aufweist, die sich um ihre Längsachse drehen, wobei in dem zylinderförmigen Luftspalt zwischen den beiden Unipolar-Magneten eine Mehrzahl von ruhenden Ankerleitern angeordnet ist, an die ein Verbraucher angeschlossen ist, so dass Schleifringe zur elektrischen Kontaktierung der Ankerleiter nicht notwendig sind.

Die CH 423 957 hingegen offenbart einen Generator zur Erzeugung von Gleichstrom, der supraleitende Ankerleiter aufweist. Die Ankerleiter werden auch hier nicht bewegt, sondern sind ortsfest. Elektrische Spannungen sollen in dem Ankerleiter durch ein sich drehendes Magnetfeld induziert werden, das mit Drehstrom gespeiste Spulen liefern.

Aus der US 4698538 ist ein bürstenloser elektrischer Motor mit Magneten bekannt, bei dem ein rohrförmiger innerer Magnet mit koaxialer Polverteilung verwendet wird. Die Magnetisierung erfolgt durch den magnetischen Fluss des inneren Magneten durch in einer radialen Ebene verlaufende ruhende Spulen, Stator und weitere den Magnetfluss bündelnde Teile. Die Feldverteilung ist nicht homogen.

In der DE 35 09 906 ist ein Dauermagnetmotor angegeben der zwei mechanisch miteinander verbundene Läufer und zwei Statoren aufweist. Die Statorwicklungen werden durch eine mehrpolige Drehstromquelle gespeiste und erzeugen in den Statoren zwei mit der jeweiligen Dauermagnetflüssen gleichsinnige sinusförmige Gleichstromfelder.

Aus der JP 58-99255 ist eine Unipolar-Maschinebekannt, die ein koaxial angeordnetes Unipolar-Magnetpaar verwendet, wobei der äußere Magnet aus magnetisierbarem Material besteht. Im zylinderförmigen Luftspalt zwischen den Magneten ist eine Reihe von ruhenden Ankerleitern angeordnet, die um den äußeren aus magnetisierbaren Material gebildeten Stator gewickelt sind, deren Enden an eine Stromversorgung bzw. einem Verbraucher angeschlossen sind. Der innere Permanentmagnet ist rotierend ausgebildet.

Der Erfindung liegt die Aufgabe zugrunde, eine verbesserte Unipolar-Maschine für die Erzeugung von Gleichstrom anzugeben, die keine Verschleißteile wie beispielsweise Schleifringe aufweist, aber gleichwohl für hohe Leistungen verwendbar ist und einen besonders einfachen Aufbau aufweist.

Diese Aufgabe wird durch die im Anspruch 1 angegebene Erfindung gelöst. Vorteilhafte Weiterbildungen der Erfindung sind in Unteransprüchen angegeben.

Die Lösung der Erfindung geht aus von einer Unipolar-Maschine mit einem koaxial angeordneten Unipolar-Magnetpaar, in dessen zylinderförmigem Luftspalt eine Reihe von ruhenden, parallel zur Längsachse des Unipolar-Magnetpaars auf dem Umfang des Luftspalts verteilt verlaufende Ankerleiter angeordnet sind, deren Enden an eine Stromversorgung bzw. einen Verbraucher angeschlossen sind.

Die erfindungsgemäße Lösung ist dadurch gekennzeichnet, dass der äußere Unipolar-Magnet ebenfalls entlang seiner radialen Umfangsfläche gleichpolige Magneteigenschaften aufweist und aus magnetisierbarem Material gebildet ist, und dass die Ankerleiter an ihren jeweiligen Enden über ringförmige Verbindungen miteinander parallel geschaltet sind, wobei jeweils mehrere Ankerleiter als Gruppen parallel geschaltet sind und mehrere Gruppen über an der Außenseite des Unipolar-Magnetpaars geführte Rückleiter in Reihe geschaltet sind.

Die erfindungsgemäße Lösung beruht damit auf der überraschenden Erkenntnis, dass es ausreichend ist, nur einen der beiden Unipolar-Magneten anzutreiben und damit relativ zum Ankerleiter zu bewegen, um eine elektrische Spannung zu erzeugen. Bisher wurde angenommen, dass die beiden das Magnetfeld bildenden Magnetpole zusammen bewegt werden müssten.

Die erfindungsgemäße Unipolar-Maschine weist daher einen neuen, aber besonders einfachen Aufbau auf, bei dem sich der innere Unipolar-Magnet dreht, während der äußere Unipolar-Magnet ruht. So kann auf Verschleißteile wie Schleifringe verzichtet werden, die üblicherweise der elektrischen Kontaktierung drehender Ankerleiter dienen. Außerdem ist bei der erfindungsgemäßen Unipolar-Maschine mit nur einem rotierenden Unipolar-Magneten die sich drehende Masse reduziert, so dass weniger Vibrationen auftreten. Eine derartige Unipolar-Maschine kann besonders vorteilhaft als Generator in Windkraftanlagen und als Nabenantrieb in Fahrzeugen verwendet werden.

Die Ankerleiter sind an ihren jeweiligen Enden über ringförmige Verbindungen miteinander parallel geschaltet, so dass die einzelnen Ankerleiter einen stabilen zylinderförmigen Körper bilden und gleichzeitig parallel geschaltet sind, damit mit der erfindungsgemäßen Unipolar-Maschine hohe Stromstärken erzeugt werden können.

Es ist vorgesehen, dass die Ankerleiter über an der Außenseite des Unipolar-Magnetpaars geführte Rückleiter in Reihe geschaltet sind, so dass mit der erfindungsgemäßen Unipolar-Maschine eine hohe Spannung erzeugt werden kann. Dabei wird durch den äußeren, ruhenden Unipolar-Magneten keine kompensierende EMK in die Rückleiter induziert, wenn der äußere Unipolar-Magnet ruht und lediglich der innere Unipolar-Magnet sich dreht.

Dabei sind jeweils mehrere Ankerleiter als Gruppen parallel geschaltet und mehrere Gruppen sind in Reihe geschaltet, so dass sowohl die Spannung als auch die Stromstärke durch die Zusammenschaltung der Ankerleiter beliebig gesteigert werden können.

In einer besonderen Ausführungsform ist vorgesehen, dass die Ankerleiter mit dem ruhenden Unipolar-Magneten gekoppelt sind. So bildet der äußere Unipolar-Magnet mit den Ankerleitern eine Einheit, wenn der innere Unipolar-Magnet sich dreht.

In einer weiteren Ausführungsform ist vorgesehen, dass die Ankerleiter und der ruhende Unipolar-Magnet zusammen vergossen sind, so dass die Ankerleiter durch die Vergussmasse mechanisch stabilisiert sind und vor Beschädigungen geschützt sind.

In einer besonderen Ausführungsform ist vorgesehen, dass wenigstens einer der Unipolar-Maschinen aus ringförmig angeordneten Stabmagneten gebildet ist. Somit können Unipolar-Magnete mit beliebigen Abmessungen aus bekannten und einfachen herzustellenden Stabmagneten gefertigt werden.

In einer weiteren Ausführungsform ist vorgesehen, dass ein Jochelement aus Dynamoblech vorgesehen ist, das die Größe des an der Außenseite des äußeren Magneten verlaufenden rückseitigen Luftspalts zwischen dem Unipolar-Magnetpaar reduziert, wobei das Jochelement wenigstens eine Öffnung für die Durchführung einer Welle oder elektrischer Anschlussleitungen aufweist. So können Verluste, hervorgerufen durch den rückseitigen Luftspalt zwischen dem ruhenden und rotierenden Unipolar-Magneten, deutlich reduziert werden.

Ein Ausführungsbeispiel wird nachstehend anhand der Zeichnungen näher erläutert. Es zeigen:
- Fig. 1: eine Querschnittsansicht des prinzipiellen Aufbaus einer Unipolar-Maschine, und
- Fig. 2: eine Seitenansicht eines prinzipiellen Aufbaus einer Unipolar-Maschine.

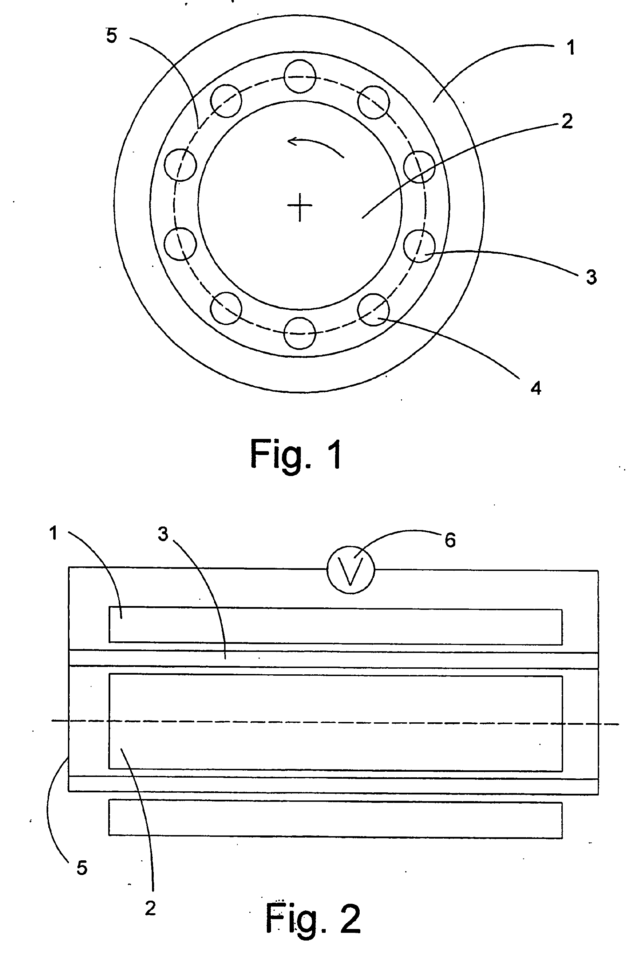

Es wird auf die Figuren 1 und 2 Bezug genommen.

Die Erfindung verwendet ein unipolares Magnetpaar mit einem ringförmigen Außenmagneten 1 und einem ringförmigen Innenmagneten 2, wobei die beiden Magnete 1, 2 unipolar ausgebildet sind, d. h. sie weisen entlang ihrer radialen Umfangsfläche gleichpolige Magneteigenschaften auf. Im gezeigten Beispiel der Fig. 1 ist der äußere Magnet 1 an seiner Innenfläche als Nordpol und der innere Magnet 2 an seiner Außenfläche als Südpol ausgebildet.

Derartige Unipolar-Magnete können aus bekannten Stabmagneten gebildet werden, indem eine Mehrzahl von Stabmagneten mit gleichgerichteter Polorientierung nebeneinander liegend ringförmig angeordnet wird, so dass sie die Mantelfläche eines zylinderförmigen Grundkörpers bedecken.

Zwischen den Unipolar-Magneten 1, 2 ist ein Luftspalt gebildet, in dem sich eine Reihe von ringförmigen Leitern 3, 4 befindet, die entlang einer Verbindungslinie 5 angeordnet sind. Dabei ist der äußere Unipolar-Magnet 1 fest mit den Leitern 3, 4 verbunden, so dass sie eine Einheit bilden. Die Leiter 3, 4 und der äußere Unipolar-Magnet 1 können mit einem Kunststoff vergossen sein, um so eine kompakte Einheit zu bilden, bei der der äußere Unipolar-Magnet 1 und die Leiter 3, 4 durch die Vergussmasse geschützt sind.

In diese Einheit aus dem äußeren Unipolar-Magneten 1 und den Leitern 3, 4 ist der innere Unipolar-Magnet 2 eingesetzt, der drehbar gelagert ist. Der innere Unipolar-Magnet 2 kann, wie schon beschrieben, aus einer Mehrzahl von Stabmagneten gebildet sein. Gemäß der Erfindung ist der äußere Unipolar-Magnet 1 ein Rohr aus einem magnetisierbaren Material und der innere Unipolar-Magnet 2 ist vorzugsweise aus Stabmagneten gebildet.

Fig. 2 zeigt eine Seitenansicht des prinzipiellen Aufbaus einer Unipolar-Maschine nach der Erfindung. In dem Luftspalt zwischen den Magneten 1, 2 sind die ringförmigen Leiter 3 angeordnet, die an ihren Enden miteinander über eine ringförmige Verbindung 5 gekoppelt sind, an einen Verbraucher 6 angeschlossen. Dadurch sind die Ankerleiter 3 parallel miteinander verschaltet und bilden zusammen mit den äußeren Unipolar-Magneten 1 einen zylinderförmigen Körper, in den der innere Unipolar-Magnet 2 eingesetzt wird.

Wenn es gewünscht ist, eine hohe Spannung zu erzielen, können die Ankerleiter 3 auch in Reihe miteinander geschaltet sein, wobei die Rückleiter entlang der Außenseite der Unipolar-Maschine verlaufen, um nicht durch das Magnetfeld geführt zu werden und dort eine umgekehrte EMK zu verursachen. Eine weitere Alternative besteht darin, mehrere Ankerleiter in Gruppen parallel und die Gruppen in Reihe zu schalten.

Um die Verluste in dem rückseitigen Luftspalt zwischen dem äußeren und dem inneren Unipolar-Magneten 1, 2 zu reduzieren, ist ein Jochelement vorgesehen, das aus Dynamoblech gefertigt ist und das Unipolar-Magnetpaar 1, 2 bis auf einen engen Spalt miteinander verbindet, der nötig ist, damit einer der beiden Unipolar-Magneten 1, 2 rotieren kann. Das Jochelement weist an beiden Stirnseiten der erfindungsgemäßen Unipolar-Maschine eine Öffnung auf, durch die eine Welle für den inneren Unipolar-Magneten 2 sowie elektrische Leitungen für den Anschluss der Leiter 3, 4 durchgeführt werden können.

## Patentansprüche

1. Unipolar-Maschine mit einem Magnetpaar, bestehend aus zwei koaxial angeordneten Unipolar-Magneten (1, 2), in dessen zylinderförmigem Luftspalt eine Reihe von ruhenden, parallel zur Längsachse des Magnetpaares auf dem Umfang des Luftspalts verteilt verlaufenden Ankerleitern (3, 4) angeordnet ist, deren Enden an eine Stromversorgung bzw. einen Verbraucher angeschlossen sind, wobei der innere als. Permanentmagnet ausgebildete Unipolar-Magnet entlang seiner radialen Umfangsfläche gleichpolige Magneteigenschaften aufweiset und entlang einer gemeinsamen Längsachse des Magnetpaares rotierend ausgebildet ist, und der äußere Unipolar-Magnet ruhend ausgebildet ist, **dadurch gekennzeichnet, dass** der äußere Unipolar-Magnet ebenfalls entlang seiner radialen Umfangsfläche gleichpolige Magneteigenschaften aufweist und aus magnetisierbarem Material gebildet ist, und dass die Ankerleiter an ihren jeweiligen Enden über ringförmige Verbindungen (5) miteinander parallel geschaltet sind, wobei jeweils mehrere Ankerleiter als Gruppen parallel geschaltet sind und mehrere Gruppen über an der Außenseite des Unipolar-Magnetpaars (1, 2) geführte Rückleiter in Reihe geschaltet sind.

2. Unipolar-Maschine nach einem der vorherigen Ansprüche, **dadurch gekennzeichnet, dass** die Ankerleiter (3, 4) mit dem ruhenden Unipolar-Magneten (1) gekoppelt sind.

3. Unipolar-Maschine nach Anspruch 2, **dadurch gekennzeichnet, dass** die Ankerleiter (3, 4) und der ruhende Unipolar-Magnet (1) zusammen vergossen sind.

4. Unipolar-Maschine nach einem der vorherigen Ansprüche, **dadurch gekennzeichnet, dass** wenigstens einer der Unipolar-Magnete (1, 2) aus ringförmig angeordneten Stabmagneten gebildet ist.

5. Unipolar-Maschine nach Anspruch 1, **dadurch gekennzeichnet, dass** ein Jochelement aus Dynamoblech vorgesehen ist, das die Größe des an der Außenseite des äußeren Unipolar-Magneten verlaufenden Luftspalts zwischen dem Unipolar-Magnetpaar (1, 2) reduziert, wobei das Jochelement wenigstens eine Öffnung für die Durchführung einer Welle und elektrischer Anschlussleitungen aufweist.

## Claims

1. Unipolar machine with a pair of magnets, consisting of two coaxially arranged unipolar magnets (1, 2), in the cylindrical air gap of which a row of stationary armature conductors (3, 4), running parallel to the longitudinal axis of the pair of magnets divided over the periphery of the air gap, is arranged, the ends of said armature conductors being connected to a power supply or a consumer, wherein the inner unipolar magnet, constructed as a permanent magnet, has homopolar magnetic properties along its radial peripheral face and is constructed as rotating along a common longitudinal axis of the pair of magnets, and the outer unipolar magnet is constructed as stationary, **characterised in that** the outer unipolar magnet likewise has homopolar magnetic properties along its radial peripheral face and is made of magnetisable material, and **in that** the armature conductors are switched parallel to one another on their respective ends via annular connections (5), wherein in each case several armature conductors are switched parallel as groups and several groups are switched in series via return conductors guided on the outside of the pair of unipolar magnets (1, 2).

2. Unipolar machine according to one of the previous claims, **characterised in that** the armature conductors (3, 4) are coupled to the stationary unipolar magnet (1) .

3. Unipolar machine according to claim 2, **characterised in that** the armature conductors (3, 4) and the stationary unipolar magnet (1) are cast together.

4. Unipolar machine according to one of the previous claims, **characterised in that** at least one of the unipolar magnets (1, 2) is made of annularly arranged bar magnets.

5. Unipolar machine according to claim 1, **characterised in that** a yoke element made of dynamo sheet is provided, which reduces the size of the air gap running on the outside of the outer unipolar magnet between the pair of unipolar magnets (1, 2), the yoke element having at least one opening for the lead-through of a shaft and electrical connection lines.

## Revendications

1. Machine unipolaire avec une paire d'aimants qui est composée de deux aimants unipolaires coaxiaux (1, 2) et dans l'entrefer cylindrique de laquelle sont disposés une série de conducteurs d'induit fixes (3, 4) qui sont répartis sur la circonférence de l'entrefer, parallèlement à l'axe longitudinal de la paire d'aimants, et dont les extrémités sont connectées à une alimentation électrique et à un consommateur, l'aimant unipolaire intérieur, conçu comme un aimant permanent, présentant des caractéristiques d'aimant homopolaires le long de sa surface périphérique radiale et étant conçu pour tourner, le long d'un axe longitudinal commun de la paire d'aimants, tandis que l'aimant unipolaire extérieur est fixe, **caractérisée en ce que** l'aimant unipolaire extérieur présente lui aussi le long de sa surface périphérique radiale des caractéristiques d'aimant homopolaires et se compose d'une matière magnétisable, et **en ce que** les conducteurs d'induit, à leurs extrémités, sont montés en parallèle l'un par rapport à l'autre grâce à des liaisons annulaires (5), plusieurs conducteurs d'induit étant montés en parallèle par groupes et plusieurs groupes étant montés en série grâce à des conducteurs de retour prévus sur le côté extérieur de la paire d'aimants unipolaires (1, 2).

2. Machine unipolaire selon la revendication précédente, **caractérisée en ce que** les conducteurs d'induit (3, 4) sont accouplés à l'aiment unipolaire fixe (1).

3. Machine unipolaire selon la revendication 2, **caractérisée en ce que** les conducteurs d'induit (3, 4) et l'aimant unipolaire fixe (1) sont scellés ensemble.

4. Machine unipolaire selon l'une des revendications précédentes, **caractérisée en ce que** l'un au moins des aimants unipolaires (1, 2) se compose d'aimants droits disposés suivant une forme annulaire.

5. Machine unipolaire selon la revendication 1, **caractérisée en ce qu'**il est prévu un élément formant culasse en tôle dynamo qui réduit la taille de l'entrefer s'étendant sur le côté extérieur de l'aimant unipolaire extérieur de la paire d'aimants unipolaires (1, 2), l'élément formant culasse présentant au moins une ouverture pour le passage d'un arbre et de lignes de raccordement électriques.
